(19) Europäisches Patentamt
European Patent Office
Office européen des brevets

(11) **EP 3 287 640 A1**

(12) **EUROPÄISCHE PATENTANMELDUNG**

(43) Veröffentlichungstag:
**28.02.2018 Patentblatt 2018/09**

(51) Int Cl.:
*F04D 19/02* (2006.01)    *F01D 5/14* (2006.01)
*F04D 29/54* (2006.01)    *F04D 29/32* (2006.01)

(21) Anmeldenummer: **17187229.4**

(22) Anmeldetag: **22.08.2017**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **26.08.2016 DE 102016115868**

(71) Anmelder: **Rolls-Royce Deutschland Ltd & Co KG**
**15827 Blankenfelde-Mahlow (DE)**

(72) Erfinder: **GÜMMER, Volker**
**85391 Allershausen (DE)**

(74) Vertreter: **Müller, Wolfram Hubertus**
**Patentanwalt**
**Teltower Damm 15**
**14169 Berlin (DE)**

(54) **STRÖMUNGSARBEITSMASCHINE MIT HOHEM AUSNUTZUNGSGRAD**

(57)    Die Erfindung betrifft eine Strömungsarbeitsmaschine, die aufweist: einen durch eine Nabe (2) und ein Gehäuse (1) gebildeten Hauptströmungspfad (3), zumindest eine im Hauptströmungspfad (3) angeordnete Anordnung rotierender, dem Fluid Energie zuführender Schaufeln, die eine Rotorbaugruppe (4) bildet, zumindest eine im Hauptströmungspfad (3) benachbart zum Rotor angeordnete Anordnung ruhender Schaufeln, die eine Statorbaugruppe (5) bildet, wobei jeweils eine Rotorbaugruppe (4) und eine dazu benachbarte Statorbaugruppe (5) eine Stufe der Strömungsarbeitsmaschine bilden. Es ist vorgesehen, dass in mindestens einer Stufe die gemittelten Schaufelprofilwinkel $\beta_{RI}$, $\beta_{RE}$ der Rotorbaugruppe (4), die gemittelten Schaufelprofilwinkel $\beta_{SI}$, $\beta_{SE}$ der Statorbaugruppe (5) sowie der Verlauf der Querschnittsflächen des Hauptströmungspfads (3) in stromabwärtiger Richtung derart gewählt sind, dass sie einer bestimmten Beziehung genügen. Die Erfindung setzt Rotor- und Statorschaufelprofilwinkel sowie den Hauptgaspfadverlauf neu in Relation und ermöglich dadurch, die realisierbare Höhe der effizient zuzuführenden Arbeit zu erhöhen.

**Fig. 3**

EP 3 287 640 A1

**Beschreibung**

**Beschreibung**

Die Erfindung bezieht sich auf eine Strömungsarbeitsmaschine gemäß dem Oberbegriff des Patentanspruchs 1.

Die aerodynamische Belastung von Strömungsarbeitsmaschinen, wie etwa Bläsern, Verdichtern, Pumpen und Ventilatoren, die sowohl mit gasförmigem als auch mit flüssigem Medium betrieben werden können, ist durch das Wachstum und die Ablösung von Grenzschichten auf den Schaufeln sowie auf den Naben- und Gehäusewänden bestimmt. Üblicherweise erhält man ein gutes Betriebsverhalten, wenn die aerodynamische Belastung gleichmäßig auf die Rotorbeschaufelung und die Statorbeschaufelung verteilt wird, beispielsweise bei einer Bläser- oder Verdichterstufe. Dabei liegt meist eine Abnahme der Strömungspfadquerschnittsfläche in Strömungsrichtung, die bei kompressiblem Arbeitsmedium zwischen der Eintritts- und der Austrittsebene einer Stufe erforderlich ist, ähnlich am Rotor und Stator, vor.

Die Stabilitätsgrenze von Strömungsarbeitsmaschinen wie Bläsern, Verdichtern, Pumpen und Ventilatoren wird maßgeblich durch die Wahl der Profilwinkel der Beschaufelung und der daraus resultierenden Belastung und dem Ausnutzungsgrad bestimmt. Aus diesem Grund werden Grenzwerte, die auf der Entwurfserfahrung erfolgreicher Maschinen beruhen, üblicherweise nicht überschritten. Dies gilt in gleicher Weise und nach dem Stand der Technik auch in ganz ähnlichem Maße sowohl für die Rotorschaufelreihen als auch für die Statorschaufelreihen einer Strömungsarbeitsmaschine. Mit den zugehörigen verwendeten Grenzwerten für Rotoren und Statoren nach dem Stand der Technik geht ein Verlauf des Hauptströmungspfades (gebildet durch Naben- und Gehäusekontur der Maschine) einher, der glatt und kontinuierlich verläuft und kaum Unterschiede der stromabwärtigen Strömungsquerschnittänderungen in Rotoren und Statoren aufzeigt. Damit sind die möglichen Stufendruckverhältnisse bei gegebener Rotorblattgeschwindigkeit auf ein schon lange bekanntes Maß begrenzt.

Aus der DE 10 2009 033 591 A1 ist eine Strömungsarbeitsmaschine mit mindestens einer Schaufelreihengruppe bekannt, bei der der Flächenquerschnitt des Hauptströmungspfades in mindestens einer Stufe der Strömungsarbeitsmaschine zu einem überhöhten Rotor-Stator Einschnürungsverhältnis führt.

Der Erfindung liegt die Aufgabe zu Grunde, eine Strömungsarbeitsmaschine mit neuer Inbezugsetzung der Schaufelwinkel und des Hauptströmungspfadflächenverlaufes zu schaffen.

Diese Aufgabe wird durch eine Strömungsarbeitsmaschine mit den Merkmalen des Anspruchs 1 gelöst. Ausgestaltungen der Erfindung sind in den Unteransprüchen angegeben.

Danach sieht die vorliegende Erfindung eine Kombination aus einem besonderen stromabwärtigen Verlauf der durchströmten Flächenquerschnitte des Hauptströmungspfades und einer besonderen Bemessung der Ein- und Austrittswinkel der Rotorschaufelprofile und Statorschaufelprofile einer Stufe der Strömungsarbeitsmaschine (SAM) vor.

So ist vorgesehen, dass in mindestens einer Stufe die gemittelten Schaufelprofilwinkel $\beta_{RI}$, $\beta_{RE}$ der Rotorbaugruppe, die gemittelten Schaufelprofilwinkel $\beta_{SI}$, $\beta_{SE}$ der Statorbaugruppe sowie der Verlauf der Querschnittsflächen des Hauptströmungspfads in stromabwärtiger Richtung derart gewählt sind, dass sie der folgenden Beziehung genügen:

$$ACC/RSC \quad > \quad -7{,}2143\ LC^2 + 1{,}5414\ LC + 2{,}776,$$

wobei ACC die Flächenänderungszahl einer Stufe bezeichnet und nach folgender Formel definiert ist:

$$ACC \quad = \quad [(R2^2 - R1^2)/(R4^2 - R3^2)] / [(R6^2 - R5^2)/ (R8^2 - R7^2)]$$

Dabei ist in Durchströmungsrichtung der Strömungsarbeitsmaschine

$R_1$ der Radius am radial innersten Punkt der Vorderkante der am weitesten stromauf befindlichen Schaufelreihe der Rotorbaugruppe,

$R_2$ der Radius am radial äußersten Punkt der Vorderkante der am weitesten stromauf befindlichen Schaufelreihe der Rotorbaugruppe,

$R_3$ der Radius am radial innersten Punkt der Hinterkante der am weitesten stromab befindlichen Schaufelreihe der Rotorbaugruppe,

$R_4$ der Radius am radial äußersten Punkt der Hinterkante der am weitesten stromab befindlichen Schaufelreihe der Rotorbaugruppe,

$R_5$ der Radius am radial innersten Punkt der Vorderkante der am weitesten stromauf befindlichen Schaufelreihe der Statorbaugruppe,

$R_6$ der Radius am radial äußersten Punkt der Vorderkante der am weitesten stromauf befindlichen Schaufelreihe der Statorbaugruppe,

$R_7$ der Radius am radial innersten Punkt der Hinterkante der am weitesten stromab befindlichen Schaufelreihe der Statorbaugruppe,

$R_8$ der Radius am radial äußersten Punkt der Hinterkante der am weitesten stromab befindlichen Schaufelreihe der Statorbaugruppe ist,

Die Flächenänderungszahl ACC gibt somit das Rotor-Stator Einschnürungsverhältnis, d.h. das Verhältnis der Querschnittsänderung von Rotor und Stator innerhalb einer Stufe und insofern den Verlauf der Querschnittsflächen des Hauptströmungspfads in stromabwärtiger Richtung an.

Weiter bezeichnet RSC die Rotorstaffelungszahl einer Stufe und ist nach folgender Formel definiert:

$$RSC \quad = \quad 1 / ( \tan \alpha_{RI} + \tan \alpha_{IE} ).$$

Die Rotorstaffelungszahl RSC einer Stufe ist ein Maß dafür, welchen Durchsatz die Stufe im Verhältnis zur Rotationsgeschwindigkeit der Rotorbaugruppe hat.

Weiter bezeichnet LC die Lastzahl einer Stufe und ist nach folgender Formel definiert:

$$LC = [1 / ( \tan \alpha_{RE} + \tan \alpha_{SI} ) * ( \tan \alpha_{SI} )] - [1 / ( \tan \alpha_{RI} + \tan \alpha_{IE} ) * ( \tan \alpha_{IE} )].$$

Die Lastzahl LC einer Stufe ist ein Maß dafür, welche Arbeit die Stufe leistet bzw. für die Strömungsumlenkung an Rotorbaugruppe und Statorbaugruppe. Ein hoher Wert von LC gibt dabei eine hohe Umlenkung an.

Dabei ist $\alpha_{IE}$ der gemittelte Winkelwert des Zuströmungsdralls vor der Rotorbaugruppe,

$\alpha_{RI}$ ist der effektive Rotoreintrittswinkel und definiert als: $\alpha_{RI} = \beta_{RI} - [2/180*\pi]$,

$\alpha_{RE}$ ist der effektive Rotoraustrittswinkel und definiert als: $\alpha_{RE} = \beta_{RE} + [2/180*\pi]$,

$\alpha_{SI}$ ist der effektive Statoreintrittswinkel und definiert als: $\alpha_{SI} = \beta_{SI} - [2/180*\pi]$,

$\alpha_{SE}$ ist der effektive Statoraustrittswinkel und definiert als: $\alpha_{SE} = \beta_{SE} + [2/180*\pi]$.

Weiter ist $\beta_{RI}$ der gemittelte Eintritts-Schaufelprofilwinkel der Rotorbaugruppe, $\beta_{RE}$ der gemittelte Austritts-Schaufelprofilwinkel der Rotorbaugruppe, $\beta_{SI}$ der gemittelte Eintritts-Schaufelprofilwinkel der Statorbaugruppe und $\beta_{SE}$ der gemittelte Austritts-Schaufelprofilwinkel der Statorbaugruppe, wobei jeweils über die Schaufelhöhe gemittelt ist.

Der Winkel - $[2/180*\pi]$ stellt einen Inzidenzwinkel und der Winkel + $[2/180*\pi]$ einen Deviationswinkel dar. Diese Winkel berücksichtigen, dass die Strömung unter einem kleinen Winkel zum Eintritts-Schaufelprofilwinkel und zum Austritts-Schaufelprofilwinkel, der mit $2\pi/180*$ bei etwa $\pm$ 2 Grad angenommen wird, die Schaufeln anströmt bzw. von diesen wegströmt.

Die Erfindung basiert auf der Erkenntnis, dass sich die realisierbare Höhe der effizient zuzuführenden Arbeit erhöhen lässt, wenn Rotor- und Statorschaufelprofilwinkel sowie der Hauptgaspfadverlauf neu in Relation gesetzt werden, mit der Folge, dass die Anzahl der Stufen mehrstufiger axialer Strömungsarbeitsmaschinen sich reduzieren lässt, unter Einhaltung heute geforderter Druckverhältnisse.

In Ausgestaltungen der erfindungsgemäßen Strömungsarbeitsmaschinen ist vorgesehen, dass die Schaufeln der Rotorbaugruppe mit einer starken Profilwölbung und die Statorbaugruppe als Hochauftriebskonfiguration ausgeführt sind.

Die Erfindung betrifft eine Strömungsarbeitsmaschine sowohl für ein gasförmiges als auch für ein flüssiges Arbeitsmedium. Vorausgesetzt wird bei der erfindungsgemäßen Lehre eine mindestens im Wesentlichen axiale Bauart der Strömungsarbeitsmaschine.

Eine Ausgestaltung der Erfindung sieht vor, dass der gemittelte Eintritts-Schaufelprofilwinkel $\beta_{RI}$ der Rotorbaugruppe, der gemittelte Austritts-Schaufelprofilwinkel $\beta_{RE}$ der Rotorbaugruppe, der gemittelten Eintritts-Schaufelprofilwinkel $\beta_{SI}$ der Statorbaugruppe und der gemittelten Austritts-Schaufelprofilwinkel $\beta_{SE}$ der Statorbaugruppe wie folgt bestimmt werden:

$$\beta_{RI} = [ \Sigma_{i=1\ldots21} \ \beta_{RIN}(i)] / 21$$

$$\beta_{RE} = [ \Sigma_{i=1\ldots21} \ \beta_{REX}(i)] / 21$$

$$\beta_{SI} = [ \Sigma_{i=1\ldots21} \ \beta_{SIN}(i)] / 21$$

$$\beta_{SE} = [\ \Sigma_{i=1\ldots21}\ \beta_{SEX}(i)]\ /\ 21$$

Dabei gibt $\beta_{RIN}$ (i) den Eintritts-Schaufelprofilwinkel der Rotorbaugruppe im Meridianstromlinienprofilschnitt (i), $\beta_{REX}$ (i) den Austritts-Schaufelprofilwinkel der Rotorbaugruppe im Meridianstromlinienprofilschnitt (i), $\beta_{SIN}$ (i) den Eintritts-Schaufelprofilwinkel der Statorbaugruppe im Meridianstromlinienprofilschnitt (i), und wobei $\beta_{SEX}$ (i) den Austritts-Schaufelprofilwinkel der Statorbaugruppe im Meridianstromlinienprofilschnitt (i) an. Dabei sind die Meridianstromlinienprofilschnitte (i) äquidistant zwischen Nabe und Gehäuse verteilt.

Der gemittelte Eintritts-Schaufelprofilwinkel oder Austritts-Schaufelprofilwinkel der Schaufeln einer Rotorbaugruppe oder Statorbaugruppe stellt somit einen Mittelwert über eine hohe Anzahl der jeweiligen Schaufelprofilwinkel von entlang der Hauptströmungspfadhöhe zwischen Naben- und Gehäusekontur äquidistant verteilten Meridianstromlinienprofilschnitten dar, wobei als Zahl beispielhaft 21 gewählt ist.

Gemäß einer Ausgestaltung der Erfindung ist der oben genannte gemittelte Winkelwert $\alpha_{IE}$ des Zuströmungsdralls vor der Rotorbaugruppe gleich Null, wenn eine Stufe (bestehend aus Rotorbaugruppe und der Rotorbaugruppe unmittelbar stromab angeordneter Statorbaugruppe) keine Vorleit-Statorbaugruppe besitzt und eine drallfreie Zuströmung zur Rotorbaugruppe gegeben ist. Wenn aufgrund anderer Einbauten eine drallbehaftete Zuströmung vorgesehen ist, ist der Wert ungleich Null.

Für den gemäß einer Ausführungsvariante der vorliegenden Erfindung vorgesehenen Fall, dass die Strömungsarbeitsmaschine eine zu einer betrachteten Stufe stromaufwärts angeordnete Vorleit-Statorbaugruppe aufweist, ist der gemittelte Winkelwert $\alpha_{IE}$ des Zuströmungsdralls vor der Rotorbaugruppe durch den effektiven Vorleit-Statoraustrittswinkel der Vorleit-Statorbaugruppe gegeben, wobei gilt:

$\alpha_{IE} = \beta_{IE} + [2/180*\pi]$, wenn die Vorleit-Statorbaugruppe eine Umlenkung der Strömung hin zur Maschinenachsrichtung vornimmt,

$\alpha_{IE} = \beta_{IE} - [2/180*\pi]$, wenn die Vorleit-Statorbaugruppe eine Umlenkung der Strömung weg von der Maschinenachsrichtung vornimmt,

wobei $\beta_{IE}$ den gemittelten Austritts-Schaufelprofilwinkel der Vorleit-Statorbaugruppe angibt. Dieser wird beispielsweise gebildet durch $[\Sigma_{i=1\ldots21}\ \beta_{IEX}(i)]\ /\ 21$, wobei $\beta_{IEX}$ den Austritts-Schaufelprofilwinkel der Vorleit-Statorbaugruppe im Meridianstromlinienprofilschnitt (i) angibt.

Eine weitere Ausgestaltung der Erfindung sieht vor, dass die Statorbaugruppe wenigstens einer Stufe durch eine Hochauftriebskonfiguration gebildet ist. Eine solche stellt einen hohen Auftrieb am Stator bereit. Sie umfasst beispielsweise eine Anordnung mit zwei oder mehr Stator-Schaufelreihen, beispielsweise eine Tandem-Anordnung zweier Stator-Schaufelreihen.

Gemäß einer weiteren Ausgestaltung ist mindestens eine der Stufen der Strömungsarbeitsmaschine mit einem Verlauf des Hauptströmungspfads versehen, der eine stärkere Flächenänderung über die Rotorbaugruppe hinweg und eine im Vergleich dazu geringere Flächenänderung über die Statorbaugruppe hinweg realisiert. Die Flächenänderungszahl ACC ist für diesen Fall größer als 1.

Weiter kann vorgesehen sein, dass zumindest eine der Anordnungen der Rotorbaugruppe und der Statorbaugruppe durch eine Schaufelreihengruppe gebildet wird, wobei die zumindest eine Schaufelreihengruppe aus mehreren in Hauptströmungsrichtung benachbart angeordneten Rotorschaufelreihen oder Statorschaufelreihen selben Typs als Mitgliedsschaufelreihen besteht.

Weitere Ausgestaltungen sehen vor, dass für mindestens eine Stufe gilt, dass die Rotorbaugruppe mit einreihiger Bauweise und die Statorbaugruppe mit Schaufelreihengruppe ausgeführt ist, oder dass die Rotorbaugruppe mit Schaufelreihengruppe und die Statorbaugruppe mit einreihiger Bauweise ausgeführt ist, oder dass die Rotorbaugruppe mit Schaufelreihengruppe und die Statorbaugruppe mit Schaufelreihengruppe ausgeführt ist. Eine Schaufelreihengruppe realisiert dabei beispielsweise eine Tandem-Anordnung mit zwei Reihen von Schaufeln, die in festem Abstand zueinander angeordnet sind.

Eine Ausgestaltung der Erfindung sieht einen Entwurf der Strömungsarbeitsmaschine vor, bei dem die gemittelten Schaufelprofilwinkel $\beta_{RI}$, $\beta_{RE}$ der Rotorbaugruppe und die gemittelten Schaufelprofilwinkel $\beta_{SI}$, $\beta_{SE}$ der Statorbaugruppe derart gewählt sind, dass sie in einem Wertebereich liegen, für den gilt, dass LC > 0,2, insbesondere LC > 0,35, insbesondere 0,35 < LC < 0,75, insbesondere 0,4 < LC < 0,6.

Eine weitere Ausgestaltung der Erfindung sieht vor, dass für den Rotorkoeffizient RK der Rotorschaufelprofile und den Statorkoeffizient SK der Statorschaufelprofile gilt:

$$SK \quad > \quad -6{,}4583\ RK^2 + 2{,}225\ RK + 0{,}2633,$$

Dabei ist RK der Rotorkoeffizient und wird berechnet als

$$RK = \Delta\alpha_R * \lambda_R,$$

gemessen in rad$^2$,
wobei $\Delta\alpha_R$ die Rotorumlenkung und $\lambda_R$ der Rotorstaffelungswinkel ist und gilt:

$$\Delta\alpha_R = \alpha_{RI} - \alpha_{RE},$$

gemessen in rad

$$\lambda_R = (\ \alpha_{RI} + \alpha_{RE}\ )\ /\ 2,$$

gemessen in rad,
Weiter ist SK der Statorkoeffizient ist und wird berechnet als

$$SK = \Delta\alpha_S * \lambda_S,$$

gemessen in rad$^2$,
wobei $\Delta\alpha_S$ die Statorumlenkung und $\lambda_S$ der Statorstaffelungswinkel ist und gilt:

$$\Delta\alpha_S = \alpha_{SI} - \alpha_{SE},$$

gemessen in rad, und

$$\lambda_S = (\alpha_{SI} + \alpha_{SE}\ )\ /\ 2,$$

gemessen in rad.

Es wird somit das Produkt aus der Umlenkung $\Delta\alpha_R$, $\Delta\alpha_S$ der Schaufelprofile und dem Staffelungswinkel $\lambda_R$, $\lambda_S$ an Rotor und Stator betrachtet und mit obiger Formel in Beziehung gesetzt. Der Rotorkoeffizient RK und der Statorkoeffizient stellen dabei eine Belastungsgröße dar, wobei RK den Grad der Umlenkung der Strömung an der Rotorbaugruppe und SK die Auftriebsfähigkeit der Statorbaugruppe angibt. Hohe Werte von RK geben dabei eine starke Umlenkung der Strömung an der Rotorbaugruppe und hohe Werte von SK eine hohe Auftriebsfähigkeit der Statorbaugruppe an.

Dabei kann vorgesehen sein, dass einer Stufe mit hohem Ausnutzungsgrad eine weitere solche direkt benachbarte Stufe stromab vorgesehen ist, wobei es sich um einen Mehrstufenverband handelt.

Eine Ausgestaltung der Erfindung sieht einen Entwurf der Strömungsarbeitsmaschine vor, bei dem die Rotorumlenkung $\Delta\alpha_R$ und der Rotorstaffelungswinkel $\lambda_R$ derart gewählt sind, dass sie in einem Wertebereich liegen, für den gilt, dass RK > 0,2, insbesondere RK > 0,3, insbesondere 0,3 < RK < 0,42, insbesondere 0,33 < RK < 0,39.

Die erfindungsgemäße Lösung ist sowohl bei Strömungsarbeitsmaschinen mit nur einer aus Rotorbaugruppe und Statorbaugruppe gebildeten Stufe als auch mit mehreren, jeweils aus Rotorbaugruppe und Statorbaugruppe bestehenden Stufen einsetzbar.

Eine Ausgestaltung der Erfindung sieht vor, dass es sich bei der erfindungsgemäßen Strömungsarbeitsmaschine um einen Verdichter eines Flugtriebwerks, insbesondere eines Turbofantriebwerks handelt.

Die Erfindung wird nachfolgend unter Bezugnahme auf die Figuren der Zeichnung anhand mehrerer Ausführungsbeispiele näher erläutert. Es zeigen:

Figur 1    eine schematische Darstellung erfindungsgemäß betroffener Strömungsarbeitsmaschinen;

Figur 2    die Definition von Meridianstromlinienprofilschnitten;

Figur 3    schematisch ein Ausführungsbeispiel einer Strömungsarbeitsmaschine im Meridianschnitt;

Figur 4    die Definition der Schaufelprofilwinkel an der Vorder- und Hinterkante eines Meridianstromlinienprofilschnittes (MSPS) einer Rotorbaugruppe (R) oder Statorbaugruppe (S) oder Vorleit-Statorbaugruppe (I);

Figur 5    die Bestimmung von Mittelwerten der Schaufelprofilwinkel über der Schaufelhöhe auf Grundlage von 21 Meridianstromlinienprofilschnitten;

Figur 6    die erfindungsgemäße Grenzlinie für den Zusammenhang zwischen der Lastzahl, der Rotorstaffelungszahl und der Flächenänderungszahl; und

Figur 7    die erfindungsgemäße Grenzlinie für den Zusammenhang zwischen der Rotorkoeffizient und Statorkoeffizient.

Die vorliegende Erfindung bezieht sich auf einen weiten Bereich von Bauweisen einer Strömungsarbeitsmaschine (SAM).

Die Strömungsarbeitsmaschine besteht aus einer oder mehreren Stufen. Jede Stufe umfasst eine Rotorbaugruppe (kurz Rotor) und eine Statorbaugruppe (kurz Stator). Der Rotor besteht aus einer Anzahl von Schaufeln, die mit der rotierenden Welle der Maschine verbunden sind und Energie an das Arbeitsmedium abgeben. Der Rotor kann mit oder ohne Deckband am äußeren Schaufelende ausgeführt sein. Der Stator besteht aus einer Anzahl feststehender Schaufeln, die nabenseitig wie gehäuseseitig mit festem oder freiem Schaufelende ausgeführt sein können. Die Rotortrommel und die Beschaufelung sind von einem Gehäuse umgeben. Die Maschine kann einen Stator vor dem ersten Rotor aufweisen (Vorleitrad). Die Statoren können -abweichend von der unbeweglichen Fixierung- drehbar gelagert sein und zur Verstellung eine von außerhalb des Ringkanals zugängliche Spindel besitzen. Alternativ kann die Strömungsarbeitsmaschine eine Nebenstromkonfiguration derart aufweisen, dass sich der einstromige Ringkanal hinter einer bestimmten Schaufelreihe in zwei konzentrische Ringkanäle aufteilt, die ihrerseits mindestens jeweils eine weitere Schaufelreihe beherbergen. Weiterhin kann die besagte Strömungsarbeitsmaschine bei Mehrstufigkeit zwei gegenläufige Wellen besitzen, sodass die Rotorschaufelreihen von Stufe zu Stufe die Drehrichtung wechseln. Hierbei existieren keine Statoren zwischen gegenläufigen Rotoren.

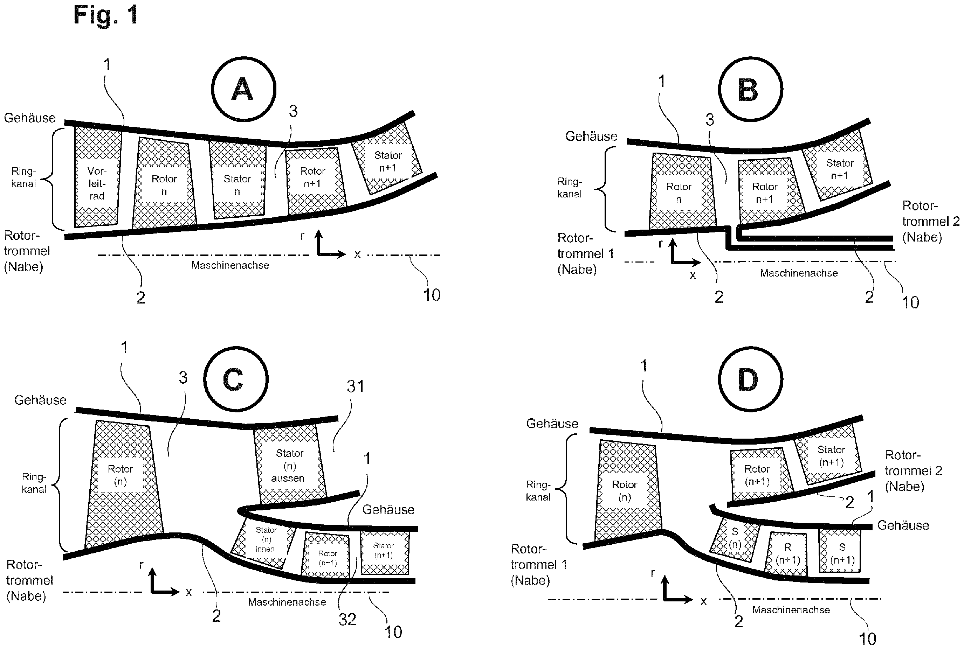

Die Figur 1 zeigt beispielhaft vier nach dieser Beschreibung mögliche Konfigurationen A, B, C, D einer Strömungsarbeitsmaschine. Dabei sind das Gehäuse jeweils mit dem Bezugszeichen 1, die Rotortrommel bzw. Nabe mit dem Bezugszeichen 2, der Ringskanal bzw. Hauptströmungspfad mit dem Bezugszeichen 3 und die Maschinenachse mit dem Bezugszeichen 10 gekennzeichnet. Die Konfiguration C entspricht dabei der Konfiguration eines Bypass-Flugtriebwerks. Der Ringskanal 3 teilt sich hinter dem ersten Rotor (Fan) in einen Sekundärstromkanal 31 und einen Primärstromkanal 32 aus, wobei der Primärstromkanal 32 durch das Kerntriebwerk führt.

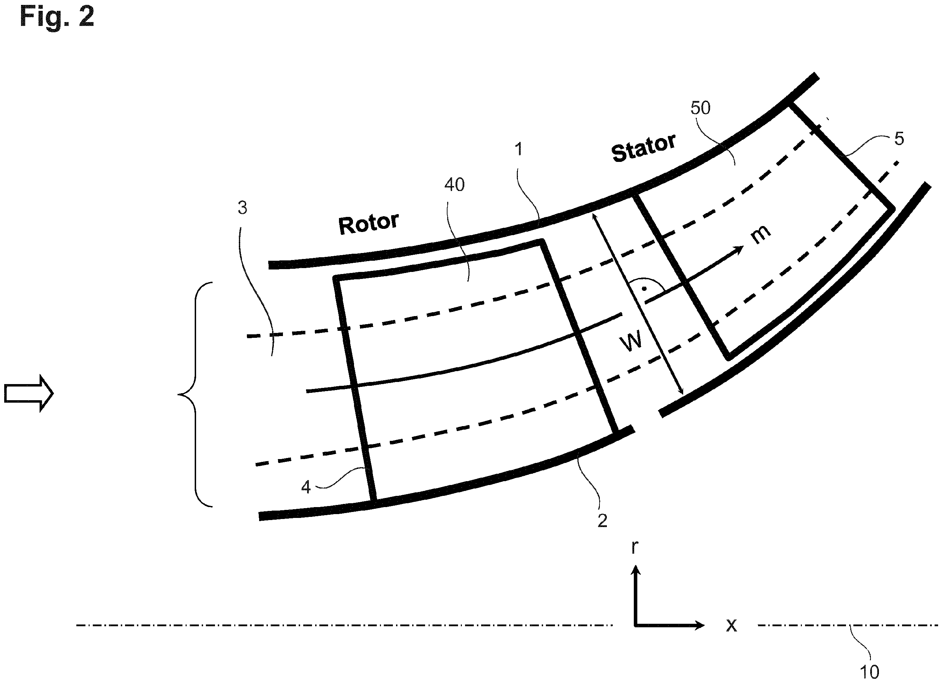

Die Figur 2 gibt eine genaue Definition der Meridianstromlinien und der Meridianstromlinienprofilschnitte. Es ist ein Ausschnitt eines Hauptströmungspfads 3 dargestellt, der radial außen durch ein Gehäuse 1 und radial innen durch eine Rotortrommel bzw. Nabe 2 begrenzt ist. Im Hauptströmungspfad 3 ist schematisch eine Rotorschaufel 40 einer Rotorbaugruppe 4 und eine Statorschaufel 50 einer Statorbaugruppe 5 dargestellt. Die mittlere Meridianstromlinie m wird durch die geometrische Mitte des Ringskanals 3 gebildet. Errichtet man an jedem Ort der mittleren Stromlinie m eine Normale, so erhält man zum einen den Verlauf der Ringkanalweite W entlang des Strömungspfades und zum anderen eine Anzahl von Normalen, mit deren Hilfe sich bei gleicher relativer Unterteilung in Richtung der Kanalhöhe weitere Meridianstromlinien ergeben. Der Schnitt einer Meridianstromlinie mit einer Schaufel 40, 50 ergibt einen Meridianstromlinienprofilschnitt, der Schnitt der mittleren Meridianstromlinie mit einer Schaufel 40, 50 ergibt den sogenannten Mittelschnitt.

Bei der erfindungsgemäßen Lösung ist es günstig, wenn wenigstens die Statorbaugruppe wenigstens einer Stufe der Strömungsarbeitsmaschine als Hochauftriebskonfiguration ausgeführt ist. Dies ist insbesondere dann von Vorteil, wenn die einzelnen Stufen dieser Strömungsarbeitsmaschine mit einem Verlauf des Hauptströmungspfades versehen sind, der eine vergleichsweise starke Flächenänderung über die Rotorbaugruppe hinweg und eine vergleichsweise geringe Flächenänderung über die Statorbaugruppe hinweg erlaubt, wobei die Umlenkung der Rotorbaugruppe und ihre Profilwölbung, und insbesondere das Produkt aus Umlenkung und Staffelungswinkel, deutlich größer ist als beim Stand der Technik. Demgemäß ist es sinnvoll, abweichend vom Stand der Technik, gemeinsam mit dieser Ausprägung entscheidende Auslegungsgrößen, und im Besonderen die Schaufelprofilwinkel des Rotors und Stators, in einen neuen Bereich des Entwurfsraumes hinzuführen.

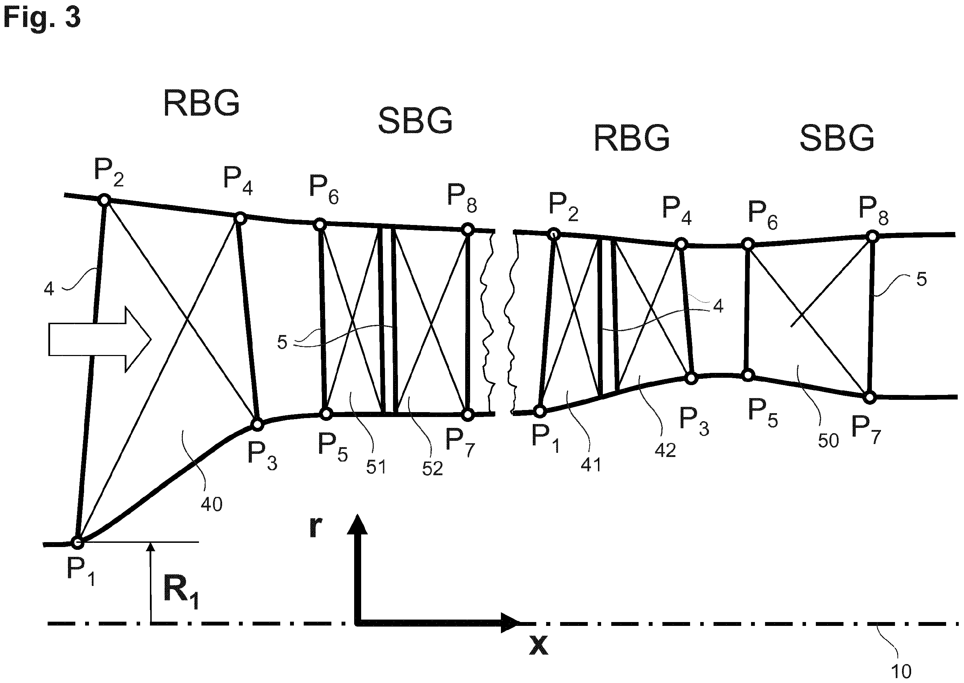

Die Figur 3 zeigt ausgewählte zwei Stufen einer mehrstufigen Strömungsarbeitsmaschine in axialer Bauweise. Die vier Eckpunkte $P_1$ bis $P_4$ der Rotorbaugruppe 4 (RBG) und die vier Eckpunkte $P_5$ bis $P_8$ der Statorbaugruppe 5 (SBG) sind mit Punkten markiert. Sowohl die Rotorbaugruppe und als die Statorbaugruppe können erfindungsgemäß entweder eine einzelne Schaufelreihe zur Erfüllung der aerodynamischen Aufgabe aufweisen, oder aber mehrere (mindestens zwei) zu einer Schaufelreihengruppe zusammengefassten Schaufelreihen aufweisen. Beispielhaft ist bei der links dargestellten Stufe eine Rotorbaugruppe 4 mit einer Schaufelreihe mit Schaufeln 40, gefolgt von einem Stator 5 mit zwei Mitgliedsschaufelreihen mit Schaufeln 51, 52 vorgesehen, und ist bei der rechts dargestellten Stufe eine Rotorbaugruppe 4 mit zwei Mitgliedsschaufelreihen mit Schaufeln 41, 42, gefolgt von einer Statorbaugruppe 5 mit einer Schaufelreihe mit Schaufeln 50 vorgesehen.

Erfindungsgemäß sind aber sowohl an der Rotorbaugruppe 4 als auch an der Statorbaugruppe 5 mehr als zwei Mitgliedsschaufelreihen ebenfalls vorsehbar. Wenigstens eine Stufe der Strömungsarbeitsmaschine kann erfindungsgemäß mindestens eine Schaufelreihengruppe umfassen, sodass folgende erfindungsgemäße Konfigurationen möglich sind:

1.) Rotorbaugruppe mit einreihiger Bauweise, gefolgt von einer Statorbaugruppe mit Schaufelreihengruppe,
2.) Rotorbaugruppe mit Schaufelreihengruppe, gefolgt von einer Statorbaugruppe mit einreihiger Bauweise,
3.) Rotorbaugruppe mit Schaufelreihengruppe, gefolgt von einer Statorbaugruppe mit Schaufelreihengruppe.

Die Eckpunkte $P_1$ bis $P_8$ werden durch die Schnittpunkte der Vorder- und Hinterkanten (bzw. deren hauptströmungspfadrandorthogonalen Verlängerung bei Rotor- oder Statorschaufelenden mit Spalt) und dem Gehäuse bzw. der Nabe festgelegt. Verläuft die Naben- oder Gehäusekontur in Umfangsrichtung nicht bei konstantem Radius, so kommt der in Umfangsrichtung arithmetisch gemittelte Radius zum Tragen.

Der Rotor 4 besitzt die Punkte $P_1$ bis $P_4$, der Stator 5 die Punkte $P_5$ bis $P_8$. Jeder Punkt $P_{(i)}$ hat die axiale Position X(i) und den Radius $R_{(i)}$, wie beispielhaft für den Punkt $P_1$ eingezeichnet. Das Koordinatenbezugssystem liegt auf der Maschinenachse 10.

Die Durchströmung der Maschine erfolgt stets von links nach rechts, wie durch den dicken Pfeil dargestellt.

Dabei ist in Durchströmungsrichtung der Strömungsarbeitsmaschine

$R_1$ der Radius am radial innersten Punkt $P_1$ der Vorderkante der am weitesten stromauf befindlichen Schaufelreihe der Rotorbaugruppe,

$R_2$ der Radius am radial äußersten Punkt $P_2$ der Vorderkante der am weitesten stromauf befindlichen Schaufelreihe der Rotorbaugruppe,

$R_3$ der Radius am radial innersten Punkt $P_3$ der Hinterkante der am weitesten stromab befindlichen Schaufelreihe der Rotorbaugruppe,

$R_4$ der Radius am radial äußersten Punkt $P_4$ der Hinterkante der am weitesten stromab befindlichen Schaufelreihe der Rotorbaugruppe,

$R_5$ der Radius am radial innersten Punkt $P_5$ der Vorderkante der am weitesten stromauf befindlichen Schaufelreihe der Statorbaugruppe,

$R_6$ der Radius am radial äußersten Punkt $P_6$ der Vorderkante der am weitesten stromauf befindlichen Schaufelreihe der Statorbaugruppe,

$R_7$ der Radius am radial innersten Punkt $P_7$ der Hinterkante der am weitesten stromab befindlichen Schaufelreihe der Statorbaugruppe.

$R_8$ der Radius am radial äußersten Punkt $P_8$ der Hinterkante der am weitesten stromab befindlichen Schaufelreihe der Statorbaugruppe

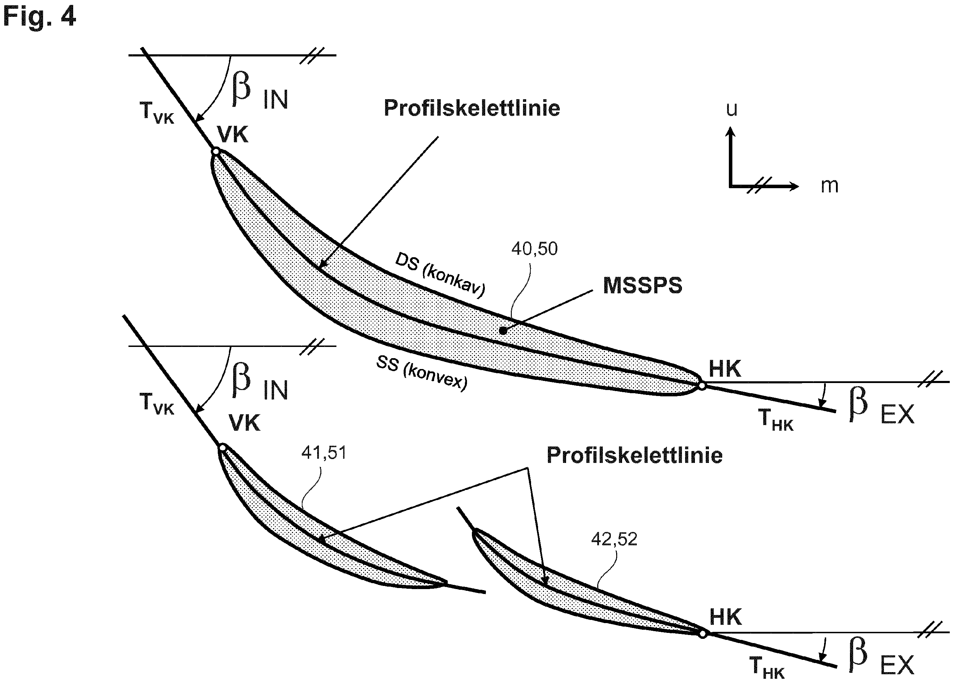

Die Figur 4 zeigt schematisch die Definition der Schaufelprofilwinkel, auch Metallwinkel genannt, an der Vorder- und Hinterkante eines Schaufelprofils. Dargestellt ist im oberen Bildteil ein Meridianstromlinienprofilschnitt einer Schaufel auf einer Meridianstromfläche (u-m-Ebene). Hierbei kann es sich um eine Rotorschaufel 40, eine Statorschaufel 50 oder eine Vorleit-Statorschaufel handeln - die Defintionssystematik ist bei allen identisch.

Zur Bestimmung der Metallwinkel ist es notwendig, in der Ebene des Schaufelprofilschnitts die Profilskelettlinie, das heißt die Mittellinie zwischen Druckseite (DS) und Saugseite (SS) des Profils, zu ermitteln. Die am Vorder- und Hinterkantenpunkt (VK, HK) an die Profilskelettlinie angelegten Tangenten $T_{VK}$ und $T_{HK}$ quantifizieren die Ausrichtung des Profils und damit die Metallwinkel. Der Eintrittsmetallwinkel $\beta_{IN}$ ergibt sich schließlich zwischen der Tangente $T_{VK}$ und der Meridianrichtung m, der Austrittsmetallwinkel $\beta_{EX}$ ergibt sich zwischen der Tangente $T_{HK}$ und der Meridianrichtung m.

Im unteren Bildteil ist der Meridianstromlinienschnitt durch eine Schaufelreihengruppe, bestehend aus wenigstens zwei in Strömungsrichtung auf einander folgend angeordneten Mitgliedsschaufelreihen mit Schaufeln 41, 51, 42, 52 dargestellt. Es kann sich sich um Mitgliedsschaufelreihen einer Rotorbaugruppe, einer Statorbaugruppe oder einer Vorleit-Statorbaugruppe handeln - die Definitionssystematik ist wiederum bei allen identisch.

In diesem Fall ergibt sich der Eintrittsmetallwinkel $\beta_{IN}$ an der Vorderkante VK der am weitesten stromaufwärts angeordneten Mitgliedschaufelreihe zwischen der Tangente $T_{VK}$ an deren Skelettlinie und der Meridianrichtung m, und der Austrittsmetallwinkel $\beta_{EX}$ ergibt sich an der Hinterkante HK der am weitesten stromabwärts angeordneten Mitgliedschaufelreihe zwischen der Tangente $T_{HK}$ an deren Skelettlinie und der Meridianrichtung m.

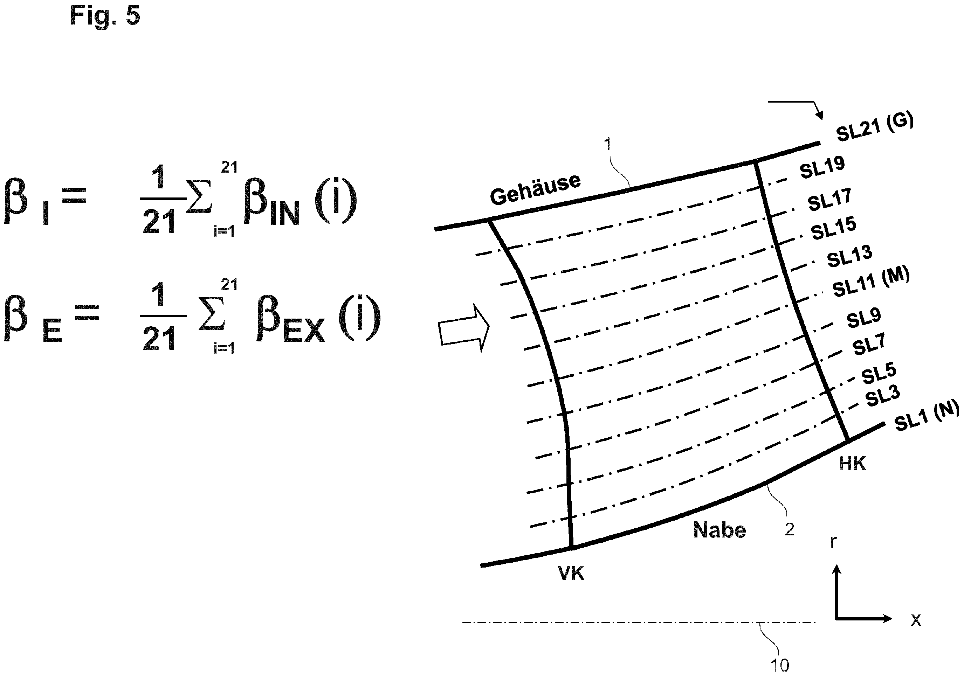

Sind die örtlichen Schaufelprofilwinkel bekannt, kann als repräsentativer Wert für eine Rotorbaugruppe (R), Statorbaugruppe (S) oder Vorleit-Statorbaugruppe (I) der Mittelwert über eine Anzahl von z.B. 21 entlang der Hauptströmungspfadhöhe zwischen Naben- und Gehäusekontur äquidistant verteilter Meridianstromlinienprofilschnitte gebildet werden, siehe Figur 5, die 21 äquidistante Meridianstromlinienprofilschnitte entsprechend den Figuren 2 und 4 betrachtet (wobei nur jede zweite Meridianstromlinie eingezeichnet ist):

Nach dieser Systematik erhält man die über die Schaufelhöhe gemittelten Schaufelprofilwinkel (Metallwinkel) der Rotorbaugruppe (R) oder der Statorbaugruppe (S) oder einer Vorleit-Statorbaugruppe (I) gemäß der Formel:

$$\beta_I = \Sigma_{i=1\ldots21}\ \beta_{IN}(i)\ /\ 21$$

$$\beta_E = \Sigma_{i=1\ldots21}\ \beta_{EX}(i)\ /\ 21,$$

wobei $\beta_I$ den gemittelten Eintritts-Schaufelprofilwinkel und den $\beta_E$ den gemittelten Austritts-Schaufelprofilwinkel angeben.

Im Einzelnen ergeben sich als gemittelte Schaufelprofilwinkel $\beta_{RI}$, $\beta_{RE}$ der Rotorbaugruppe (R), als gemittelte Schaufelprofilwinkel $\beta_{SI}$, $\beta_{SE}$ der Statorbaugruppe (S) und als gemittelte Austritts-Schaufelprofilwinkel $\beta_{IE}$ einer ggf. vorhandenen Vorleit-Statorbaugruppe (I):

$$\beta_{IE} = [\Sigma_{i=1\ldots21}\ \beta_{IEX}(i)]\ /\ 21$$

$$\beta_{RI} = [\Sigma_{i=1\ldots21}\ \beta_{RIN}(i)]\ /\ 21$$

$$\beta_{RE} = [\Sigma_{i=1\ldots21}\ \beta_{REX}(i)]\ /\ 21$$

$$\beta_{SI} = [\Sigma_{i=1\ldots21}\ \beta_{SIN}(i)]\ /\ 21$$

$$\beta_{SE} = [\Sigma_{i=1\ldots21}\ \beta_{SEX}(i)]\ /\ 21$$

Die strömungsrelevanten effektiven Winkel am Eintritt und Austritt der Vorleit-Statorbaugruppe (I), der Rotorbaugruppe (R) und der Statorbaugruppe (S) einer Stufe der Strömungsarbeitsmaschine sind dann:

Effektiver Vorleit-Statoraustrittswinkel:

$\alpha_{IE} = [\Sigma_{i=1\ldots21}\ \beta_{IEX}(i)]\ /\ 21 + [2/180{*}\pi] = \beta_{IE} + [2/180{*}\pi]$, wenn die Vorleit-Statorbaugruppe eine Umlenkung der Strömung hin zur Maschinenachsrichtung vornimmt,

$\alpha_{IE} = [\Sigma_{i=1\ldots21}\ \beta_{IEX}(i)]\ /\ 21 - [2/180{*}\pi] = \beta_{IE} - [2/180{*}\pi]$, wenn die Vorleit-Statorbaugruppe eine Umlenkung der Strömung weg von der Maschinenachsrichtung vornimmt.

Effektiver Rotoreintrittswinkel:

$$\alpha_{RI} = [\ \Sigma_{i=1\ldots21}\ \beta_{RIN}(i)]/\ 21\ -\ [2/180^*\pi] = \beta_{RI} - [2/180^*\pi]$$

Effektiver Rotoraustrittswinkel:

$$\alpha_{RE} = [\ \Sigma_{i=1\ldots21}\ \beta_{REX}(i)]/\ 21\ +\ [2/180^*\pi] = \beta_{RE} + [2/180^*\pi]$$

Effektiver Statoreintrittswinkel:

$$\alpha_{SI} = [\ \Sigma_{i=1\ldots21}\ \beta_{SIN}(i)]/\ 21\ -\ [2/180^*\pi] = \beta_{SI} - [2/180^*\pi]$$

Effektiver Statoraustrittswinkel:

$$\alpha_{SE} = [\ \Sigma_{i=1\ldots21}\ \beta_{SEX}(i)]/\ 21\ +\ [2/180^*\pi] = \beta_{SE} + [2/180^*\pi]$$

Der Winkel - $[2/180^*\pi]$ stellt dabei einen Inzidenzwinkel und der Winkel + $[2/180^*\pi]$ einen Deviationswinkel dar. Der Inzidenzwinkel ist der Winkel zwischen der Eintritts-Strömungsrichtung und der am Vorderkantenpunkt (VK) an die Profilskelettlinie angelegten Tangenten $T_{VK}$; der Deviationswinkel ist der Winkel zwischen der Austritts-Strömungsrichtung und der am Hinterkantenpunkt (HK) an die Profilskelettlinie angelegten Tangenten $T_{HK}$, vgl. Figur 3. Diese Winkel berücksichtigen, dass die Strömung unter einem kleinen Winkel zum Eintritts-Schaufelprofilwinkel $\beta_{IN}$ und zum Austritts-Schaufelprofilwinkel $\beta_{EX}$ die Schaufeln anströmt bzw. von diesen wegströmt, wobei dieser Winkel bei einer normalen Auslegung mit $2\pi/180^*$ bei etwa $\pm$ 2 Grad angenommen wird.

Für den Fall, dass eine Stufe (bestehend aus Rotorbaugruppe und der Rotorbaugruppe unmittelbar stromab angeordneter Statorbaugruppe) keine Vorleit-Statorbaugruppe besitzt, ist für den effektiven Vorleit-Statoraustrittswinkel $\alpha_{IE}$ der Wert Null anzunehmen, wenn drallfreie Zuströmung zur Rotorbaugruppe gegeben ist, und es ist der gemittelte Winkelwert des Zuströmungsdralls vor der Rotorbaugruppe anzunehmen, wenn aufgrund von anderen Einbauten eine drallbehaftete Zuströmung vorgesehen ist.

Aus den bereitgestellten Größen lassen sich mehrere relevanten Kennzahlen für die Auslegung einer Strömungsarbeitsmaschine bestimmen, mit deren Hilfe die aerodynamische Güte, die Leistungsdichte und die Hauptströmungspfadgestalt - somit also schließlich der Ausnutzungsgrad einer Strömungsarbeitsmaschine - erfasst werden kann. So werden definiert:

Lastzahl der Stufe:

$$LC = [1\ /\ (\ \tan\alpha_{RE} + \tan\alpha_{SI}\ )\ ^*\ (\ \tan\alpha_{SI}\ )] - [1\ /\ (\ \tan\alpha_{RI} + \tan\alpha_{IE}\ )\ ^*\ (\ \tan\alpha_{IE}\ )]$$

Rotorstaffelungszahl:

$$RSC = 1 / ( \tan \alpha_{RI} + \tan \alpha_{IE} )$$

Flächenänderungszahl einer Stufe (bestehend aus Rotorbaugruppe und Statorbaugruppe):

$$ACC = [(R_2^2 - R_1^2)/(R_4^2 - R_3^2)] / [(R_6^2 - R_5^2)/ R_8^2 - R_7^2)]$$

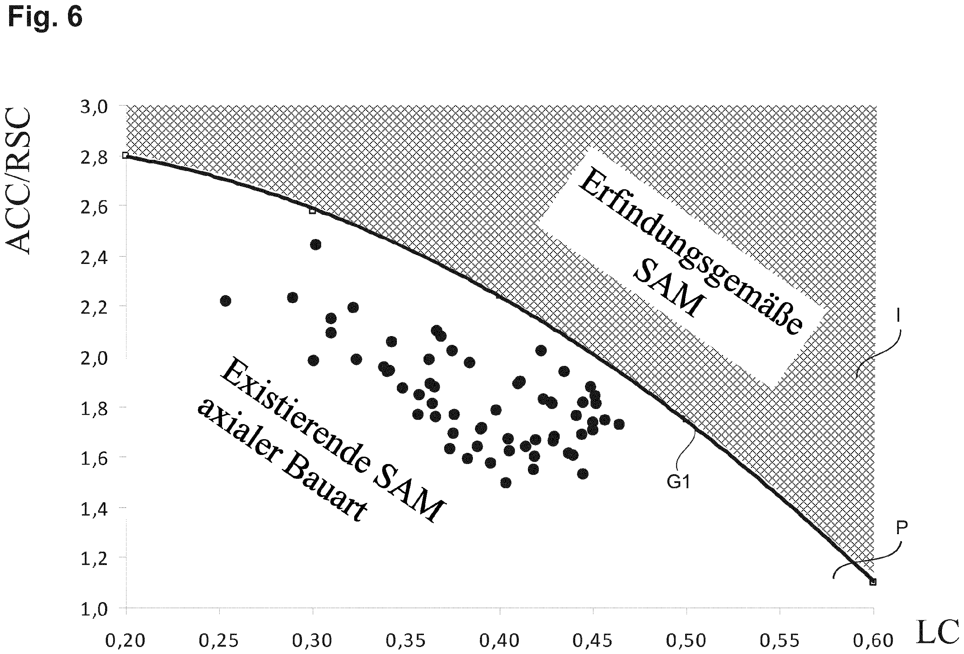

Diese drei wichtigen Charakteristika einer Strömungsarbeitsmaschine werden in der Figur 6 betrachtet. Dort ist der Quotient ACC/RSC aus der Flächenänderungszahl ACC und der Rotorstaffelungszahl RSC als Funktion der Lastzahl LC dargestellt.

Die Graphik zeigt eine umfassende Schar von Wertepunkten P, die für existierende Strömungsarbeitsmaschine nach dem Stand der Technik ermittelt wurden. Diese finden sich in einem verständlicherweise engen Band, das sich aus dem Befolgen üblicher Entwurfsregeln für Schaufeln und Hauptgaspfade ergeben hat.

Setzt man jedoch die Möglichkeiten, die sich durch den Gebrauch von Hochauftriebskonfigurationen ergeben, wenigstens im Bereich der Statorbaugruppe um und erschließt einen neuen Entwurfsraum für günstige Kombinationen von LC, ACC und RSC, so liegen die erfindungsgemäßen Lösungen I für eine Strömungsarbeitsmaschine im Diagramm abgesetzt im rechten oberen Wertebereich.

Die Lösungen nach dem heutigen Stand lassen sich durch eine einhüllende Linie klar eingrenzen. Diese Linie ist als "Grenzlinie" G1 in Figur 6 eingezeichnet und ist durch folgenden Formelzusammenhang definiert:

$$ACC/RSC \quad = \quad -7{,}2143\,LC^2 + 1{,}5414\,LC + 2{,}776$$

Wertepunkte I für erfindungsgemäße Stufen einer Strömungsarbeitsmaschine liegen oberhalb dieser Grenzlinie G1, d.h. es gilt für erfindungsgemäße Stufen einer Strömungsarbeitsmaschine: $ACC/RSC > -7{,}2143\,LC^2 + 1{,}5414\,LC + 2{,}776$.

Für einen gewünschten Wertepunkt I, der oberhalb der Grenzlinie G1 liegt und der bei einer Stufe realisiert werden soll, ergeben sich Scharen von Werten für die gemittelten Schaufelprofilwinkel $\beta_{RI}$, $\beta_{RE}$ der Rotorbaugruppe, die gemittelten Schaufelprofilwinkel $\beta_{SI}$, $\beta_{SE}$ der Statorbaugruppe sowie den Verlauf der Querschnittsflächen des Hauptströmungspfads in stromabwärtiger Richtung, die durch die Radien $R_1$ bis $R_8$ gegeben sind. Geeignete Werte von $\beta_{RI}$, $\beta_{RE}$, $\beta_{SI}$, $\beta_{SE}$ sowie $R_1$ bis $R_8$ können auf diese Weise ermittelt werden. Die Werte genügen dabei den genannten Formeln betreffend ACC, RSC, LC.

Erfindungsgemäß vorteilhaft wirkt sich ein Entwurf im Wertebereich von LC > 0,2 aus. Erfindungsgemäß günstig wirkt sich ein Entwurf im Wertebereich LC > 0,35 aus. Erfindungsgemäß sehr günstig wirkt sich ein Entwurf im Wertebereich von 0,35 < LC < 0,75 aus. Erfindungsgemäß besonders günstig wirkt sich ein Entwurf im Wertebereich von 0,4 < LC < 0,6 aus.

Eine besondere Ausprägung der erfindungsgemäßen Strömungsarbeitsmaschine ist es, dass die Umlenkung der Rotorschaufelprofile größer ist als üblich und insbesondere das Produkt aus Umlenkung der Rotorschaufelprofile und Staffelungswinkel der Rotorschaufelprofile deutlich größer ist als beim Stand der Technik. Es werden definiert:

| | |
|---|---|
| Rotorumlenkung: | $\Delta\alpha_R = \alpha_{RI} - \alpha_{RE}$, gemessen in rad |
| Rotorstaffelungswinkel: | $\lambda_R = (\alpha_{RI} + \alpha_{RE}) / 2$, gemessen in rad |
| Rotorkoeffizient: | $RK = \Delta\alpha_R * \lambda_R$, gemessen in rad$^2$ |

| | |
|---|---|
| Statorumlenkung: | $\Delta\alpha_S = \alpha_{SI} - \alpha_{SE}$, gemessen in rad |
| Statorstaffelungswinkel: | $\lambda_S = (\alpha_{SI} + \alpha_{SE}) / 2$, gemessen inrad |
| Statorkoeffizient: | $SK = \Delta\alpha_S * \lambda_S$, gemessen in rad$^2$ |

Das Produkt aus Umlenkung der Statorschaufelprofile und Staffelungswinkel der Statorschaufelprofile liegt näher am Bereich des Standes der Technik.

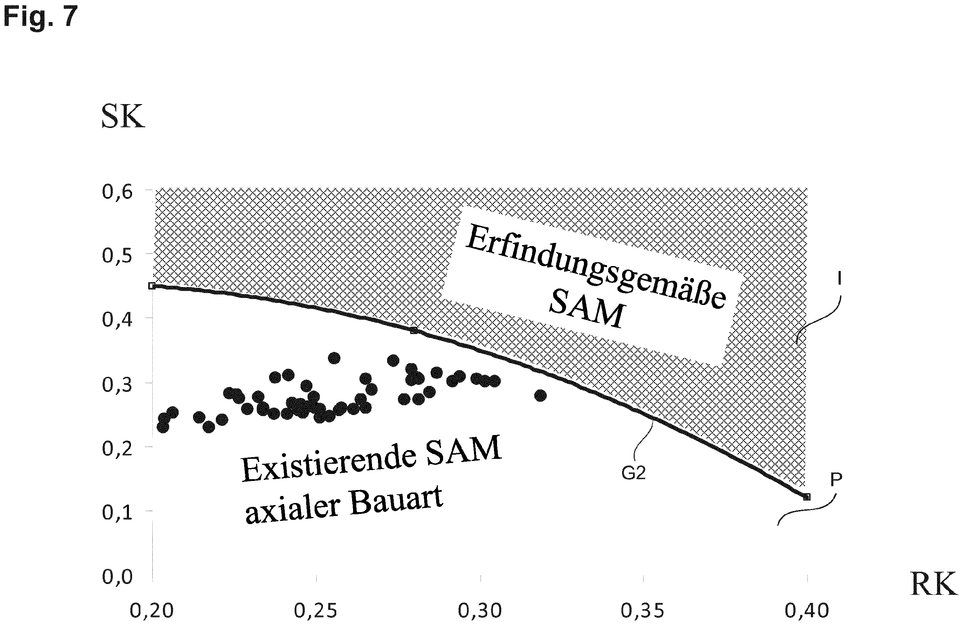

Betrachtet man den neuen Entwurfsraum für günstige Kombinationen von RK und SK, so liegen die erfindungsgemäßen Lösungen für eine Strömungsarbeitsmaschine im Diagramm der Figur 7 abgesetzt im rechten erhöhten Wertebereich.

Die Lösungen P nach dem heutigen Stand lassen sich durch eine einhüllende Linie klar eingrenzen. Diese Linie ist als "Grenzlinie" G2 in der Figur 7 eingezeichnet und ist durch folgenden Formelzusammenhang definiert:

$$SK = -6{,}4583\,RK^2 + 2{,}225\,RK + 0{,}2633$$

Wertepunkte I für erfindungsgemäße Stufen einer Strömungsarbeitsmaschine liegen oberhalb dieser Grenzlinie G2, d.h. es gilt erfindungsgemäß: $SK > -6{,}4583\,RK^2 + 2{,}225\,RK + 0{,}2633$.

Erfindungsgemäß vorteilhaft wirkt sich ein Entwurf im Wertebereich von RK > 0,2 aus. Erfindungsgemäß günstig wirkt sich ein Entwurf im Wertebereich RK > 0,3 aus. Erfindungsgemäß sehr günstig wirkt sich ein Entwurf im Wertebereich von 0,3 < RK < 0,42 aus. Erfindungsgemäß besonders günstig wirkt sich ein Entwurf im Wertebereich von 0,33 < RK < 0,39 aus.

Erfindungsgemäß besonders günstig ist es, wenn einer Stufe mit erfindungsgemäßem hohem Ausnutzungsgrad eine weitere solche direkt benachbarte Stufe stromab vorgesehen ist und es sich demzufolge um einen Mehrstufenverband handelt.

Aus dem Vergleich mit dem Stand der Technik ergibt sich, dass die erfindungsgemäße Lösung insbesondere dann von großem Vorteil ist, wenn für Rotoren und Statoren unterschiedliche Entwurfsmethodiken verwendet werden. Erfindungsgemäß schafft der Einsatz eines hohen Ausnutzungsgrades der Stufe und einer dahin gehend kombiniert optimierten Geometrie der Schaufeln und des Hauptströmungspfades die Voraussetzung für die Schaffung eines neuen Entwurfsraumes für Strömungsarbeitsmaschinen, der Möglichkeiten für den effektiven Hybrideinsatz der sich evolutionär fortentwickelnden heutigen Schaufeltechnologie und neuartiger Hochauftriebsschaufelkonzepte (z. B. Schaufelreihengruppe) schafft.

Der erfindungsgemäße Lösungsansatz ist somit völlig neuartig und anders als aus dem Stand der Technik bekannt und schafft eine abgegrenzte Kategorie neuer Strömungsarbeitsmaschinen.

Es wird darauf hingewiesen, dass die Merkmale der einzelnen beschriebenen Ausführungsbeispiele der Erfindung in verschiedenen Kombinationen miteinander kombiniert werden können. Sofern Bereiche definiert sind, so umfassen diese sämtliche Werte innerhalb dieser Bereiche sowie sämtliche Teilbereiche, die in einen Bereich fallen.

**Patentansprüche**

1. Strömungsarbeitsmaschine, die aufweist:

   - einen durch eine Nabe (2) und ein Gehäuse (1) gebildeten Hauptströmungspfad (3),
   - zumindest eine im Hauptströmungspfad (3) angeordnete Anordnung rotierender, dem Fluid Energie zuführender Schaufeln (40, 41, 42), die eine Rotorbaugruppe (4) bildet,
   - zumindest eine im Hauptströmungspfad (3) benachbart zur Rotorbaugruppe angeordnete Anordnung ruhender Schaufeln (50, 51, 52), die eine Statorbaugruppe (5) bildet, wobei
   - jeweils eine Rotorbaugruppe (4) und eine dazu benachbarte Statorbaugruppe (5) eine Stufe der Strömungsarbeitsmaschine bilden, und
   - die Querschnittsflächen des Hauptströmungspfads (3) in stromabwärtiger Richtung in mindestens einer Stufe der Strömungsarbeitsmaschine eine Änderung erfahren,

   **dadurch gekennzeichnet,**
   **dass** in mindestens einer Stufe die gemittelten Schaufelprofilwinkel $\beta_{RI}$, $\beta_{RE}$ der Rotorbaugruppe (4), die gemittelten Schaufelprofilwinkel $\beta_{SI}$, $\beta_{SE}$ der Statorbaugruppe (5) sowie der Verlauf der Querschnittsflächen des Hauptströmungspfads (3) in stromabwärtiger Richtung derart gewählt sind, dass sie der folgenden Beziehung genügen:

$$ACC/RSC > -7{,}2143\,LC^2 + 1{,}5414\,LC + 2{,}776,$$

   wobei ACC die Flächenänderungszahl einer Stufe bezeichnet und nach folgender Formel definiert ist:

$$ACC = [(R2^2 - R1^2)/(R4^2 - R3^2)] / [(R6^2 - R5^2)/(R8^2 - R7^2)],$$

   wobei in Durchströmungsrichtung der Strömungsarbeitsmaschine
   $R_1$ der Radius am radial innersten Punkt ($P_1$) der Vorderkante der am weitesten stromauf befindlichen Schaufelreihe der Rotorbaugruppe (4),
   $R_2$ der Radius am radial äußersten Punkt ($P_2$) der Vorderkante der am weitesten stromauf befindlichen Schaufelreihe

der Rotorbaugruppe (4),

$R_3$ der Radius am radial innersten Punkt ($P_3$) der Hinterkante der am weitesten stromab befindlichen Schaufelreihe der Rotorbaugruppe (4),

$R_4$ der Radius am radial äußersten Punkt ($P_4$) der Hinterkante der am weitesten stromab befindlichen Schaufelreihe der Rotorbaugruppe (4),

$R_5$ der Radius am radial innersten Punkt ($P_5$) der Vorderkante der am weitesten stromauf befindlichen Schaufelreihe der Statorbaugruppe (5),

$R_6$ der Radius am radial äußersten Punkt ($P_6$) der Vorderkante der am weitesten stromauf befindlichen Schaufelreihe der Statorbaugruppe (5),

$R_7$ der Radius am radial innersten Punkt ($P_7$) der Hinterkante der am weitesten stromab befindlichen Schaufelreihe der Statorbaugruppe (5),

$R_8$ der Radius am radial äußersten Punkt ($P_8$) der Hinterkante der am weitesten stromab befindlichen Schaufelreihe der Statorbaugruppe (5) ist,

wobei RSC die Rotorstaffelungszahl einer Stufe bezeichnet und nach folgender Formel definiert ist:

$$RSC \quad = \quad 1 / ( \tan \alpha_{RI} + \tan \alpha_{IE} ),$$

wobei LC die Lastzahl einer Stufe bezeichnet und nach folgender Formel definiert ist:

$$LC = [1 / ( \tan \alpha_{RE} + \tan \alpha_{SI} ) * ( \tan \alpha_{SI} )] - [1 / ( \tan \alpha_{RI} + \tan \alpha_{IE} ) * ( \tan \alpha_{IE} )],$$

wobei $\alpha_{IE}$ der gemittelte Winkelwert des Zuströmungsdralls vor der Rotorbaugruppe (4) ist,

wobei $\alpha_{RI}$ der effektive Rotoreintrittswinkel ist und definiert ist als:

$$\alpha_{RI} = \beta_{RI} - [2/180^*\pi],$$

wobei $\alpha_{RE}$ der effektive Rotoraustrittswinkel ist und definiert ist als:

$$\alpha_{RE} = \beta_{RE} + [2/180^*\pi],$$

wobei der effektive Statoreintrittswinkel ist und definiert ist als:

$$\alpha_{SI} = \beta_{SI} - [2/180^*\pi],$$

wobei der effektive Statoraustrittswinkel ist und definiert ist als:

$$\alpha_{SE} = \beta_{SE} + [2/180^*\pi],$$

wobei $\beta_{RI}$ den gemittelten Eintritts-Schaufelprofilwinkel der Rotorbaugruppe (4), wobei $\beta_{RE}$ den gemittelten Austritts-Schaufelprofilwinkel der Rotorbaugruppe (4),

wobei $\beta_{SI}$ den gemittelten Eintritts-Schaufelprofilwinkel der Statorbaugruppe (5), und

wobei $\beta_{SE}$ den gemittelten Austritts-Schaufelprofilwinkel der Statorbaugruppe (5) angibt.

**2.** Strömungsarbeitsmaschine nach Anspruch 1, **dadurch gekennzeichnet, dass** der gemittelte Eintritts-Schaufelprofilwinkel $\beta_{RI}$ der Rotorbaugruppe (4), der gemittelte Austritts-Schaufelprofilwinkel $\beta_{RE}$ der Rotorbaugruppe (4), der gemittelte Eintritts-Schaufelprofilwinkel $\beta_{SI}$ der Statorbaugruppe (5), und der gemittelte Austritts-Schaufelprofilwinkel $\beta_{SE}$ der Statorbaugruppe (5) wie folgt bestimmt werden:

$$\beta_{RI} = [ \Sigma_{i=1\ldots21} \ \beta_{RIN}(i)] / 21$$

$$\beta_{RE} = [\ \Sigma_{i=1\ldots21}\ \beta_{REX}(i)]\ /\ 21$$

$$\beta_{SI} = [\ \Sigma_{i=1\ldots21}\ \beta_{SIN}(i)]\ /\ 21$$

$$\beta_{SE} = [\ \Sigma_{i=1\ldots21}\ \beta_{SEX}(i)]\ /\ 21$$

wobei $\beta_{RIN}$ (i) den Eintritts-Schaufelprofilwinkel der Rotorbaugruppe (4) im Meridianstromlinienprofilschnitt (i),

wobei $\beta_{REX}$ (i) den Austritts-Schaufelprofilwinkel der Rotorbaugruppe (4) im Meridianstromlinienprofilschnitt (i),

wobei $\beta_{SIN}$ (i) den Eintritts-Schaufelprofilwinkel der Statorbaugruppe (5) im Meridianstromlinienprofilschnitt (i), und

wobei $\beta_{SEX}$ (i) den Austritts-Schaufelprofilwinkel der Statorbaugruppe (5) im Meridianstromlinienprofilschnitt (i) angibt, und

wobei die Meridianstromlinienprofilschnitte (i) äquidistant zwischen Nabe (2) und Gehäuse (1) verteilt sind.

3. Strömungsarbeitsmaschine nach Anspruch 1 oder 2, **dadurch gekennzeichnet, dass** die Strömungsarbeitsmaschine eine zu einer betrachteten Stufe stromaufwärts angeordnete Vorleit-Statorbaugruppe aufweist, für welchen Fall der gemittelte Winkelwert $\alpha_{IE}$ des Zuströmungsdralls vor der Rotorbaugruppe (4) gegeben ist durch den effektiven Vorleit-Statoraustrittswinkel der Vorleit-Statorbaugruppe, wobei gilt:

$\alpha_{IE} = [\Delta_{i=1\ldots21}\ \beta_{IEX}(i)]\ /\ 21 + [2/180{*}\pi] = \beta_{IE} + [2/180{*}\pi]$, wenn die Vorleit-Statorbaugruppe eine Umlenkung der Strömung hin zur Maschinenachsrichtung vornimmt,

$\alpha_{IE} = [\Sigma_{i=1\ldots21}\ \beta_{IEX}(i)]\ /\ 21 - [2/180{*}\pi] = \beta_{IE} - [2/180{*}\pi]$, wenn die Vorleit-Statorbaugruppe eine Umlenkung der Strömung weg von der Maschinenachsrichtung vornimmt,

wobei $\beta_{IE}$ den gemittelten Austritts-Schaufelprofilwinkel der Vorleit-Statorbaugruppe angibt.

4. Strömungsarbeitsmaschine nach einem der vorangehenden Ansprüche, **dadurch gekennzeichnet, dass** die Statorbaugruppe (5) wenigstens einer Stufe durch eine Hochauftriebskonfiguration gebildet ist.

5. Strömungsarbeitsmaschine nach einem der vorangehenden Ansprüche, **dadurch gekennzeichnet, dass** mindestens eine der Stufen der Strömungsarbeitsmaschine mit einem Verlauf des Hauptströmungspfads (3) versehen ist, der eine stärkere Flächenänderung über die Rotorbaugruppe (4) hinweg und eine im Vergleich dazu geringere Flächenänderung über die Statorbaugruppe (5) hinweg realisiert.

6. Strömungsarbeitsmaschine nach einem der vorangehenden Ansprüche, **dadurch gekennzeichnet, dass** die Rotorbaugruppe (4) und/oder die Statorbaugruppe (5) mindestens einer Stufe durch eine Schaufelreihengruppe gebildet wird, wobei die Schaufelreihengruppe aus mehreren in Hauptströmungsrichtung benachbart angeordneten Rotorschaufelreihen oder Statorschaufelreihen selben Typs als Mitgliedsschaufelreihen besteht.

7. Strömungsarbeitsmaschine nach einem der vorangehenden Ansprüche, **dadurch gekennzeichnet, dass** der jeweilige Schaufelprofilwinkel ($\beta_{IN}$, $\beta_{EX}$) definiert ist als Winkel im Meridianstromlinienprofilschnitt zwischen der am Vorderkantenpunkt (VK) oder am Hinterkantenpunkt (HK) an die Profilskelettlinie angelegten Tangente ($T_{VR}$, $T_{HK}$) und der Meridianrichtung (m).

8. Strömungsarbeitsmaschine nach einem der vorangehenden Ansprüche, **dadurch gekennzeichnet, dass** für mindestens eine Stufe gilt, dass die Rotorbaugruppe (4) mit einreihiger Bauweise und die Statorbaugruppe (5) mit Schaufelreihengruppe ausgeführt ist.

9. Strömungsarbeitsmaschine nach einem der vorangehenden Ansprüche, **dadurch gekennzeichnet, dass** für mindestens eine Stufe gilt, dass die Rotorbaugruppe (4) mit Schaufelreihengruppe und die Statorbaugruppe (5) mit einreihiger Bauweise ausgeführt ist.

10. Strömungsarbeitsmaschine nach einem der vorangehenden Ansprüche, **dadurch gekennzeichnet, dass** für mindestens eine Stufe gilt, dass die Rotorbaugruppe (4) mit Schaufelreihengruppe und die Statorbaugruppe (5) mit Schaufelreihengruppe ausgeführt sind.

**11.** Strömungsarbeitsmaschine nach einem der vorangehenden Ansprüche, **dadurch gekennzeichnet, dass** die gemittelten Schaufelprofilwinkel $\beta_{RI}$, $\beta_{RE}$ der Rotorbaugruppe (4) und die gemittelten Schaufelprofilwinkel $\beta_{SI}$, $\beta_{SE}$ der Statorbaugruppe (5) derart gewählt sind, dass sie in einem Wertebereich liegen, für den gilt, dass LC > 0,2, insbesondere LC > 0,35, insbesondere 0,35 < LC < 0,75, insbesondere 0,4 < LC < 0,6.

**12.** Strömungsarbeitsmaschine nach einem der vorangehenden Ansprüche, **dadurch gekennzeichnet, dass** für den Rotorkoeffizient RK der Rotorschaufelprofile und den Statorkoeffizient SK der Statorschaufelprofile gilt:

$$SK \qquad > \qquad -6,4583\ RK^2 + 2,225\ RK + 0,2633,$$

wobei der Rotorkoeffizient RK berechnet wird als

$$RK = \Delta\alpha_R * \lambda_R,$$

gemessen in rad$^2$, wobei $\Delta\alpha_R$ die Rotorumlenkung und $\lambda_R$ der Rotorstaffelungswinkel ist und gilt:

$$\Delta\alpha_R = \alpha_{RI} - \alpha_{RE},$$

gemessen in rad

$$\lambda_R = (\alpha_{RI} + \alpha_{RE}) / 2,$$

gemessen in rad, und wobei Statorkoeffizient SK berechnet wird als

$$SK = \Delta\alpha_S * \lambda_S,$$

gemessen in rad$^2$,
wobei $\Delta\alpha_S$ die Statorumlenkung und $\lambda_S$ der Statorstaffelungswinkel ist und gilt:

$$\Delta\alpha_S = \alpha_{SI} - \alpha_{SE},$$

gemessen in rad, und

$$\lambda_S = (\alpha_{SI} + \alpha_{SE}) / 2,$$

gemessen in rad.

**13.** Strömungsarbeitsmaschine nach Anspruch 12, **dadurch gekennzeichnet, dass** die Rotorumlenkung $\Delta\alpha_R$ und der Rotorstaffelungswinkel $\lambda_R$ derart gewählt sind, dass sie in einem Wertebereich liegen, für den gilt, dass RK > 0,2, insbesondere RK > 0,3, insbesondere 0,3 < RK < 0,42, insbesondere 0,33 < RK < 0,39.

**14.** Strömungsarbeitsmaschine nach einem der vorangehenden Ansprüche, **dadurch gekennzeichnet, dass** einer Stufe mit hohem Ausnutzungsgrad eine weitere solche direkt benachbarte Stufe stromab vorgesehen ist, wobei es sich um einen Mehrstufenverband handelt.

## Fig. 1

**Fig. 2**

EP 3 287 640 A1

**Fig. 3**

EP 3 287 640 A1

## Fig. 4

$\beta_{IN}$

$T_{VK}$

VK

Profilskelettlinie

u

m

DS (konkav)

40,50

MSSPS

SS (konvex)

HK

$T_{HK}$

$\beta_{EX}$

$\beta_{IN}$

$T_{VK}$

VK

41,51

Profilskelettlinie

42,52

HK

$T_{HK}$

$\beta_{EX}$

EP 3 287 640 A1

**Fig. 5**

$$\beta_I = \frac{1}{21} \sum_{i=1}^{21} \beta_{IN}(i)$$

$$\beta_E = \frac{1}{21} \sum_{i=1}^{21} \beta_{EX}(i)$$

EP 3 287 640 A1

**Fig. 6**

EP 3 287 640 A1

**Fig. 7**

EP 3 287 640 A1

**Europäisches Patentamt**
**European Patent Office**
**Office européen des brevets**

# EUROPÄISCHER RECHERCHENBERICHT

Nummer der Anmeldung

EP 17 18 7229

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2 991 929 A (STALKER EDWARD A) 11. Juli 1961 (1961-07-11) * Abbildungen 1-4 * | 1-14 | INV. F04D19/02 F01D5/14 F04D29/54 |
| X | US 3 775 023 A (DAVIS J ET AL) 27. November 1973 (1973-11-27) * Abbildungen 1,2 * | 1-14 | F04D29/32 |
| X | DE 897 616 C (KUEHNLE AG) 23. November 1953 (1953-11-23) * Abbildungen 2-4 * | 1-13 | |
| X | DE 10 2009 033591 A1 (ROLLS ROYCE DEUTSCHLAND [DE]) 20. Januar 2011 (2011-01-20) * Abbildungen 2, 3 * | 1-14 | |
| A | EP 0 953 728 B1 (KAWASAKI HEAVY IND LTD [JP]) 18. Februar 2004 (2004-02-18) * Absätze [0004], [0023] * * Abbildung 4 * | 1-14 | **RECHERCHIERTE SACHGEBIETE (IPC)** |
| A | EP 2 096 260 A2 (ROLLS ROYCE DEUTSCHLAND [DE]) 2. September 2009 (2009-09-02) * Abbildung 6 * | 1-14 | F04D F01D |

Der vorliegende Recherchenbericht wurde für alle Patentansprüche erstellt

| Recherchenort | Abschlußdatum der Recherche | Prüfer |
|---|---|---|
| Den Haag | 16. Januar 2018 | de Verbigier, L |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&: Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 17 18 7229

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-01-2018

| Im Recherchenbericht angeführtes Patentdokument | Datum der Veröffentlichung | Mitglied(er) der Patentfamilie | Datum der Veröffentlichung |
|---|---|---|---|
| US 2991929 A | 11-07-1961 | KEINE | |
| US 3775023 A | 27-11-1973 | KEINE | |
| DE 897616 C | 23-11-1953 | BE 425270 A<br>DE 897616 C<br>FR 840765 A<br>GB 505078 A<br>NL 53382 C | 16-01-2018<br>23-11-1953<br>03-05-1939<br>02-05-1939<br>16-10-1942 |
| DE 102009033591 A1 | 20-01-2011 | DE 102009033591 A1<br>EP 2275647 A2<br>US 2011014040 A1 | 20-01-2011<br>19-01-2011<br>20-01-2011 |
| EP 0953728 B1 | 18-02-2004 | CA 2269889 A1<br>DE 69914823 D1<br>DE 69914823 T2<br>EP 0953728 A1<br>JP H11311130 A<br>US 6350103 B1 | 27-10-1999<br>25-03-2004<br>09-12-2004<br>03-11-1999<br>09-11-1999<br>26-02-2002 |
| EP 2096260 A2 | 02-09-2009 | DE 102008011645 A1<br>EP 2096260 A2<br>US 2009274554 A1 | 03-09-2009<br>02-09-2009<br>05-11-2009 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009033591 A1